# EUROPÄISCHE PATENTSCHRIFT

(11) **EP 2 990 600 B1**
(45) Veröffentlichungstag und Bekanntmachung des Hinweises auf die Patenterteilung: **07.06.2017**
(21) Anmeldenummer: 14182761.8
(22) Anmeldetag: 29.08.2014
(51) Int. Cl.: F01D 5/14

(54) **Gasturbinen-Baugruppe**
Gas turbine assembly
Ensemble de turbine à gaz

(43) Veröffentlichungstag der Anmeldung: 02.03.2016
(73) Patentinhaber: MTU Aero Engines AG, 80995 München (DE)
(72) Erfinder: Hoeger, Martin, 85435 Erding (DE)

(56) Entgegenhaltungen:
- EP-A1- 2 607 625
- WO-A2-2009/019282
- DE-A1-102011 008 812

## Beschreibung

Die vorliegende Erfindung betrifft eine Baugruppe für eine Gasturbine mit einem Turbinen- und einem benachbarten Zwischengehäuse, eine Gasturbine, insbesondere ein Gasturbinenflugtriebwerk, mit einer solchen Baugruppe sowie ein Verfahren zum Herstellen einer solchen Baugruppe.

Aus der DE 10 2011 008 812 A1 ist ein Zwischengehäuse eines Gastriebwerks gemäß den Merkmalen des Oberbegriffs von Anspruch 1 bekannt, mit einer radial außenliegenden Begrenzungswand, die eine sich in Umfangsrichtung verändernde Kontur aufweist. Hierdurch kann einer Sekundärströmung in einer Kavität zwischen Turbinen- und Zwischengehäuse entgegengewirkt und so der Wirkungsgrad verbessert werden. Der Vollständigkeit halber sei zudem auch noch auf die WO 2009/019282 A2 und die EP 2 607 625 A1 hingewiesen.

Eine Aufgabe einer Ausführung der vorliegenden Erfindung ist es, den Betrieb und/oder die Herstellung einer Gasturbine zu verbessern.

Diese Aufgabe wird durch eine Baugruppe für eine Gasturbine mit den Merkmalen des Anspruchs 1 gelöst. Ansprüche 8 und 10stellen eine Gasturbine mit einer hier beschriebenen Baugruppe bzw. ein Verfahren zum Herstellen einer hier beschriebenen Baugruppe unter Schutz. Vorteilhafte Ausführungsformen der Erfindung sind Gegenstand der Unteransprüche.

Nach einem Aspekt der vorliegenden Erfindung weist eine Gasturbine, insbesondere ein Gasturbinenflugtriebwerk, eine hier beschriebene Baugruppe mit einem Turbinengehäuse und einem dem Turbinengehäuse stromabwärts benachbarten Zwischengehäuse sowie ein weiteres Turbinengehäuse auf, das dem Zwischengehäuse stromabwärts benachbart ist. Das eine Turbinengehäuse ist in einer Ausführung ein Turbinengehäuse einer Hochdruckturbine, die stromabwärts auf eine Brennkammer der Gasturbine folgt, das weitere Turbinengehäuse ein Turbinengehäuse einer Niederdruckturbine oder einer Mitteldruckturbine, auf die stromabwärts eine Niederdruckturbine folgt. In einer anderen Ausführung ist das eine Turbinengehäuse ein Turbinengehäuse einer Mitteldruckturbine, das weitere Turbinengehäuse ein Turbinengehäuse einer Niederdruckturbine.

In einer Ausführung weisen die Turbinengehäuse jeweils Rotoren mit einer Mehrzahl von in Umfangsrichtung beabstandeten Laufschaufeln auf, die in einer Ausführung zur kompakteren Darstellung verallgemeinernd ein Teil des Turbinengehäuses sein können. In einer anderen Ausführung ist ein Turbinengehäuse im Sinne der vorliegenden Erfindung nur ein relativ zu der Gasturbine bzw. dem Zwischengehäuse feststehendes bzw. stationäres Bauteil ohne den in ihm drehbar gelagerten Rotor. In einer Weiterbildung ist ein Rotor des Turbinengehäuses bzw. ein in dem Turbinengehäuse drehbar gelagerter Rotor mit einem Rotor eines der Brennkammer vorgeschalteten Verdichters gekoppelt und/oder ein Rotor des weiteren Turbinengehäuses bzw. ein in dem weiteren Turbinengehäuse drehbar gelagerter Rotor mit einem Rotor eines dem einen Verdichter vorgeschalteten weiteren Verdichters gekoppelt.

Nach einem Aspekt der vorliegenden Erfindung weist eine Baugruppe für eine Gasturbine, insbesondere eine Baugruppe einer hier beschriebenen Gasturbine, ein ein-oder mehrteiliges Turbinengehäuse und ein ein- oder mehrteiliges Zwischengehäuse auf, das dem Turbinengehäuse stromabwärts benachbart ist und eine Mehrzahl von in Umfangsrichtung beabstandeten Stützrippen aufweist.

Turbinen- und Zwischengehäuse definieren einen Strömungskanal für ein Arbeitsgas aus einer Brennkammer der Gasturbine. Hierzu weist in einer Ausführung das Turbinengehäuse eine radial äußere und/oder eine radial innere Begrenzungswand auf, die einen turbinengehäuseseitigen Abschnitt des Strömungskanals bildet bzw. radial begrenzt. Eine radial innere Begrenzungswand des Turbinengehäuses kann insbesondere durch eine, vorzugsweise relativ zu der Gasturbine bzw. dem Zwischengehäuse feststehende bzw. stationäre, Nabe, oder durch einen drehbar gelagerten Rotor, insbesondere ein Innendeckband eines Laufgitters bzw. von Laufschaufeln des Rotors, gebildet sein. Zusätzlich oder alternativ weist das Zwischengehäuse eine radial innere und eine radial äußere Begrenzungswand auf, die einen zwischengehäuseseitigen Abschnitt des Strömungskanals bilden bzw. radial begrenzen. In einer Weiterbildung sind bzw. werden die Stützrippen lösbar oder dauerhaft, vorzugsweise stoffschlüssig, insbesondere integral, mit der radial inneren und/oder äußeren Begrenzungswand des Zwischengehäuses ausgebildet. Die Stützrippen weisen in einer Ausführung jeweils eine stromaufwärtige, insbesondere gerade oder in Umfangs-und/oder Axialrichtung geneigte, insbesondere gekrümmte, Vorderkante, eine stromabwärtige Hinterkante sowie zwei einander gegenüberliegende Seitenwände auf, die diese Kanten verbinden und in einer Ausführung, insbesondere konvex, zum Strömungskanal hin gewölbt sind, in welchem sie angeordnet sind.

Zwischen dem Turbinen- und dem Zwischengehäuse ist eine Kavität ausgebildet. Diese Kavität ist in einer Ausführung radial außen von dem Strömungskanal angeordnet. Zusätzlich oder alternativ kann sie auch radial innen von dem Strömungskanal angeordnet sein. In einer Ausführung ist bzw. bildet die Kavität einen Kühlluftkanal, der in einer Weiterbildung mit einer Kühlluftversorgung der Gasturbine kommuniziert bzw. verbunden und/oder dazu vorgesehen bzw. eingerichtet ist, Kühlluft in den Strömungskanal einzuführen. In einer Ausführung weist die Kavität eine turbinengehäuseseitige Stirnseite, die in einer Weiterbildung durch eine axiale, dem Zwischengehäuse zugewandte Stirnseite des Turbinengehäuses gebildet wird bzw. ist, und eine zwischengehäuseseitige Stirnseite, die in einer Weiterbildung durch eine axiale, dem Turbinengehäuse zugewandte Stirnseite des Zwischengehäuses gebildet wird bzw. ist, auf bzw. wird durch diese axial begrenzt, wobei die beiden Stirnseiten der Kavität axial voneinander beabstandet sind, insbesondere, um einen Radialspalt, vorzugsweise den Kühlluftkanal, zu bilden.

Die Kavität weist eine strömungskanalseitige Öffnung auf, die in einer Ausführung mit dem Strömungskanal kommuniziert bzw. hierzu vorgesehen bzw. eingerichtet ist, insbesondere zum Einblasen von Kühlluft in den Strömungskanal. Zudem dient die Kavität auch dazu, unterschiedliche Wärmeausdehnungen zwischen den durch die Kavität voneinander getrennten Bereichen zuzulassen.

Diese strömungskanalseitige Öffnung weist eine, insbesondere in Umfangsrichtung durchgehende, dem Turbinengehäuse zugewandte bzw. turbinengehäuseseitige Randkontur und eine, insbesondere hiervon axial und/oder radial beabstandete und/oder in Umfangsrichtung durchgehende, dem Zwischengehäuse zugewandte bzw. zwischengehäuseseitige Randkontur auf.

In der eingangs genannten DE in 2011 008 812 A1, auf die ergänzend Bezug genommen und deren Inhalt vollinhaltlich in die vorliegende Offenbarung einbezogen wird, wird vorgeschlagen, dass diese zwischengehäuseseitige Randkontur sich entlang des Umfangs verändert. Nach einem Aspekt der vorliegenden Erfindung wird nun vorgeschlagen, dass zusätzlich oder alternativ die turbinengehäuseseitige Randkontur der Öffnung sich entlang des Umfangs radial und/oder axial verändert.

Wie in der DE 10 2011 008 812 A1 erläutert, kann eine Verblockung der Strömung stromaufwärts der Stützrippen des Zwischengehäuses zu Druckschwankungen bzw. einer Sekundärströmung in der Kavität führen. Überraschenderweise hat sich herausgestellt, dass dem durch eine Umfangskonturierung der turbinengehäuseseitige Randkontur vorteilhaft entgegengewirkt werden kann, obwohl die verblockenden Vorderkanten der Stützrippen in der Regel axial stromabwärts von einer Eintrittskante des zwischengehäuseseitigen Strömungskanalabschnitts angeordnet sind.

In einer Ausführung verändert sich die turbinengehäuseseitige Randkontur entlang des Umfangs stetig bzw. in Umfangsrichtung knickfrei, insbesondere mäander-, vorzugsweise sinusförmig. In einer anderen Ausführung kann sich die Randkontur auch entlang des Umfangs unstetig ändern, insbesondere in Umfangsrichtung Knicke bzw. Kanten aufweisen, vorzugsweise sägezahn- oder trapezförmig ausgebildet sein.

Insbesondere, wenn statt der zwischengehäuseseitigen Randkontur die turbinengehäuseseitige Randkontur der Öffnung sich entlang des Umfangs verändert, kann entsprechend in einer Ausführung eine radial äußere und/oder innere Begrenzungswand des Zwischengehäuses, die den Strömungskanal bzw. zwischengehäuseseitigen Strömungskanalabschnitt radial außen bzw. innen begrenzt, wenigstens in einem dem Turbinengehäuse zugewandten Axialabschnitt, insbesondere wenigstens eine Eintrittskante der Begrenzungswand bzw. des zwischengehäuseseitigen Strömungskanalabschnitts radial und/oder axial rotationssymmetrisch ausgebildet sein bzw. werden. Dies kann die Herstellung, Montage und/oder Strömungseigenschaften des Zwischengehäuses verbessern.

Erfindungsgemäß ist bzw. wird die turbinengehäuseseitige Randkontur an einem Flansch ausgebildet, der, insbesondere lösbar, vorzugsweise reibschlüssig, oder dauerhaft, vorzugsweise stoffschlüssig, insbesondere durch Schweißen oder Löten, mit dem Turbinengehäuse verbunden wird bzw. ist. Der Flansch ist bzw. wird in einer Ausführung separat von dem Turbinengehäuse hergestellt und anschließend mit diesem verbunden. Er kann insbesondere ein Blechformteil sein, das in einer Weiterbildung in Umfangsrichtung gekrümmt ist. In einer Ausführung weist der Flansch zwei gegeneinander, insbesondere um wenigstens 60° und/oder höchstens 120°, geneigte Schenkel auf, insbesondere einen ersten Schenkel, der sich, wenigstens im Wesentlichen, in Radialrichtung erstreckt und mit dem Turbinengehäuse verbunden wird bzw. ist, und einen zweiten Schenkel, der sich, wenigstens im Wesentlichen, in Axialrichtung erstreckt und daher als Axialschenkel bezeichnet wird, und an dessen dem Turbinengehäuse abgewandter axialer Stirnseite die turbinengehäuseseitige Randkontur ausgebildet wird bzw. ist. Hierzu kann der Flansch bzw. Schenkel in einer Ausführung entsprechend urgeformt, umgeformt und/oder, insbesondere spanend, bearbeitet werden bzw. sein.

In einer Ausführung kann eine radial äußere und/oder innere Begrenzungswand des Turbinengehäuses, die den Strömungskanal bzw. turbinengehäuseseitigen Strömungskanalabschnitt radial außen bzw. innen begrenzt, wenigstens in einem dem Zwischengehäuse zugewandten Axialabschnitt, insbesondere wenigstens eine Austrittskante der Begrenzungswand bzw. des turbinengehäuseseitigen Strömungskanalabschnitts radial und/oder axial rotationssymmetrisch ausgebildet sein bzw. werden. Dies kann die Herstellung, Montage und/oder Strömungseigenschaften des Turbinengehäuses verbessern.

Nach einem Aspekt der vorliegenden Erfindung verändert sich die turbinengehäuseseitige Randkontur entlang des Umfangs bzw. in Umfangsrichtung periodisch mit einer Teilung der Stützrippen bzw. deren Verteilung in Umfangsrichtung. Insbesondere können maximale und/oder minimale axiale und/oder radiale Erstreckungen der turbinengehäuseseitigen Randkontur entlang des Umfangs periodisch verteilt sein, wobei eine Periode einer Teilung bzw. Periode der Stützrippen(verteilung) entspricht.

Ein Umfangsbereich, auf den nachfolgend Bezug genommen wird, erstreckt sich zwischen einer Umfangsposition einer stromaufwärtigen Vorderkante einer Stützrippe und einer Umfangsposition einer stromaufwärtigen Vorderkante einer in Umfangsrichtung benachbarten Stützrippe. Die Vorderkanten dieser beiden Stützrippen weisen entsprechend einen Abstand auf, auf den nachfolgend ebenfalls Bezug genommen wird

Nach einem Aspekt weist die turbinengehäuseseitige Randkontur in einem oder mehreren, vorzugsweise allen solchen Umfangsbereichen, an einer ersten Umfangsposition, die von der Umfangsposition der Vorderkante der einen Stützrippe um höchstens 20%, insbesondere höchstens 10%, vorzugsweise höchstens 5%, des Abstandes zwischen den Umfangspositionen der Vorderkanten der beiden Stützrippen beabstandet ist, eine erste axiale Erstreckung stromabwärts und/oder eine erste radiale Erstreckung vom Strömungskanal weg, und an einer zweiten Umfangsposition zwischen den beiden Stützrippen, die von den Umfangspositionen der Vorderkanten der beiden Stützrippen um je wenigstens 30%, insbesondere wenigstens 40%, vorzugsweise wenigstens 45% des Abstandes zwischen den Umfangspositionen der Vorderkanten der beiden Stützrippen beabstandet ist, eine zweite axiale Erstreckung stromabwärts und/oder eine zweite radiale Erstreckung vom Strömungskanal weg auf.

Die erste Umfangsposition befindet sich entsprechend in einer Weiterbildung, wenigstens im Wesentlichen, stromauf einer Stützrippe bzw. der Umfangsposition ihrer Vorderkante, die zweite Umfangsposition entsprechend in einer Weiterbildung, wenigstens im Wesentlichen, in der Mitte zwischen zwei benachbarten Stützrippen bzw. in Umfangsrichtung auf Höhe der halben Teilung zwischen zwei benachbarten Stützrippen.

Unter einer axialen Erstreckung stromabwärts wird vorliegend insbesondere eine Axialposition der turbinengehäuseseitigen Randkontur an der ersten bzw. zweiten Umfangsposition verstanden, wobei eine größere axiale Erstreckung stromabwärts einer Axialposition weiter stromabwärts, insbesondere vom Turbinengehäuse weg und/oder zum Zwischengehäuse hin entspricht.

Unter einer radialen Erstreckung vom Strömungskanal weg wird vorliegend insbesondere eine Radialposition der turbinengehäuseseitigen Randkontur an der ersten bzw. zweiten Umfangsposition verstanden, wobei eine größere radiale Erstreckung einer radial äußeren Randkontur bzw. der turbinengehäuseseitigen Randkontur einer Kavität, die radial außen von dem Strömungskanal angeordnet bzw. ausgebildet ist, vom Strömungskanal weg einem größeren radialen Abstand zu einer Drehachse der Gasturbine entspricht, eine größere radiale Erstreckung einer radial inneren Randkontur bzw. der turbinengehäuseseitigen Randkontur einer Kavität, die radial innen von dem Strömungskanal angeordnet bzw. ausgebildet ist, vom Strömungskanal weg einem kleineren radialen Abstand zu der Drehachse.

Nach einem Aspekt der vorliegenden Erfindung ist die erste axiale Erstreckung größer als die zweite axiale Erstreckung, in einer Weiterbildung ist die erste axiale Erstreckung eine maximale axiale Erstreckung und/oder die zweite axiale Erstreckung eine minimale axiale Erstreckung stromabwärts innerhalb des Umfangsbereichs.

Insbesondere kann also die turbinengehäuseseitige Randkontur in einer Ausführung, wenigstens im Wesentlichen, stromauf einer oder mehrerer, insbesondere aller, Stützrippen, jeweils eine maximale axiale Erstreckung bzw. Axialposition stromabwärts aufweisen. Zusätzlich oder alternativ kann die Randkontur, wenigstens im Wesentlichen, in der Mitte zwischen einem oder mehreren, insbesondere allen, Paaren benachbarter Stützrippen bzw. in Umfangsrichtung auf Höhe der halben Teilung, jeweils eine minimale axiale Erstreckung bzw. Axialposition stromabwärts aufweisen.

Nach einem Aspekt der vorliegenden Erfindung ist zusätzlich oder alternativ die erste radiale Erstreckung vom Strömungskanal weg kleiner als die zweite radiale Erstreckung vom Strömungskanal weg, in einer Weiterbildung ist die erste radiale Erstreckung eine minimale radiale Erstreckung und/oder die zweite radiale Erstreckung eine maximale radiale Erstreckung vom Strömungskanal weg innerhalb des Umfangsbereichs.

Insbesondere kann also die radial äußere turbinengehäuseseitige Randkontur in einer Ausführung, wenigstens im Wesentlichen, stromauf einer oder mehrerer, insbesondere aller, Stützrippen, jeweils eine minimale radiale Erstreckung vom Strömungskanal weg bzw. einen minimalen radialen Abstand zu einer Drehachse der Gasturbine aufweisen. Zusätzlich oder alternativ kann die radial äußere Randkontur, wenigstens im Wesentlichen, in der Mitte zwischen einem oder mehreren, insbesondere allen, Paaren benachbarter Stützrippen bzw. in Umfangsrichtung auf Höhe der halben Teilung, jeweils eine maximale radiale Erstreckung vom Strömungskanal weg bzw. einen maximalen radialen Abstand zu der Drehachse der Gasturbine aufweisen.

Entsprechend kann eine radial innere turbinengehäuseseitige Randkontur in einer Ausführung, wenigstens im Wesentlichen, stromauf einer oder mehrerer, insbesondere aller, Stützrippen, eine minimale radiale Erstreckung vom Strömungskanal weg bzw. einen maximalen radialen Abstand zu einer Drehachse der Gasturbine aufweisen. Zusätzlich oder alternativ kann die radial innere Randkontur, wenigstens im Wesentlichen, in der Mitte zwischen einem oder mehreren, insbesondere allen, Paaren benachbarter Stützrippen bzw. in Umfangsrichtung auf Höhe der halben Teilung, jeweils eine maximale radiale Erstreckung vom Strömungskanal weg bzw. einen minimalen radialen Abstand zu der Drehachse der Gasturbine aufweisen.

In einer Ausführung beträgt in einem oder mehreren, insbesondere allen, Umfangsbereichen zwischen einer Umfangsposition einer stromaufwärtigen Vorderkante einer Stützrippe und einer Umfangsposition einer stromaufwärtigen Vorderkante einer in Umfangsrichtung benachbarten Stützrippe ein Quotient Δx/L aus bzw. Verhältnis zwischen einer Differenz Δx = |xₘₐₓ - xₘᵢₙ| zwischen einer maximalen axialen Erstreckung xₘₐₓ und minimalen axialen Erstreckung xₘᵢₙ der Randkontur stromabwärts dividiert durch einen bzw. zu einem maximalen axialen Abstand der Randkontur zu einer turbinengehäuseseitigen Stirnseite der Kavität, insbesondere durch eine bzw. zu einer maximale(n) axiale(n) Länge L eines Axialschenkels eines separaten, mit dem Turbinengehäuse verbundenen Flansches, an dem die Randkontur ausgebildet ist, wenigstens 0,02, insbesondere wenigstens 0,2, vorzugsweise wenigstens 0,4. Zusätzlich oder alternativ beträgt dieser Quotient bzw. dieses Verhältnis in einer Ausführung höchstens 0,8, insbesondere höchstens 0,6.

Alternativ kann in der zuvor genannten Gleichung für den Wert der axialen Länge L auch ein Wert verwendet werden, der im Wesentlichen 2 x Δxₖₐᵥ entspricht, wobei Δxₖₐᵥ der minimale Axialspalt zwischen der turbinen- und der zwischengehäuseseitigen Stirnwand der Kavität im heißen Betriebszustand (Dauerbetrieb) des Triebwerks ist.

In einer Ausführung beträgt in einem oder mehreren, insbesondere allen, Umfangsbereichen zwischen einer Umfangsposition einer stromaufwärtigen Vorderkante einer Stützrippe und einer Umfangsposition einer stromaufwärtigen Vorderkante einer in Umfangsrichtung benachbarten Stützrippe ein Quotient Δr/L aus bzw. Verhältnis zwischen einer Differenz Δr = |rₘₐₓ - rₘᵢₙ| zwischen einer maximalen radialen Erstreckung rₘₐₓ und minimalen radialen Erstreckung rₘᵢₙ der Randkontur vom Strömungskanal weg dividiert durch den bzw. zu dem maximalen axialen Abstand der Randkontur zu der turbinengehäuseseitigen Stirnseite der Kavität, insbesondere durch die bzw. zu der maximale(n) axiale(n) Länge L des Axialschenkels des separaten, mit dem Turbinengehäuse verbundenen Flansches, an dem die Randkontur ausgebildet ist, wenigstens 0,02, insbesondere wenigstens 0,1. Zusätzlich oder alternativ beträgt dieser Quotient bzw. dieses Verhältnis in einer Ausführung höchstens 0,4, insbesondere höchstens 0,3.

Ein weiterer Aspekt der vorliegenden Erfindung betrifft ein Verfahren zum Herstellen einer hier beschriebenen Baugruppe, wobei eine hier beschriebene turbinengehäuseseitige Randkontur ausgebildet wird.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: zwei übereinandergelegte Meridianschnitte einer Baugruppe einer Gasturbine nach einer Ausführung der vorliegenden Erfindung; und
- Fig. 2: ein in Fig. 1 mit "II" bezeichnetes Detail in vergrößerter Ansicht.

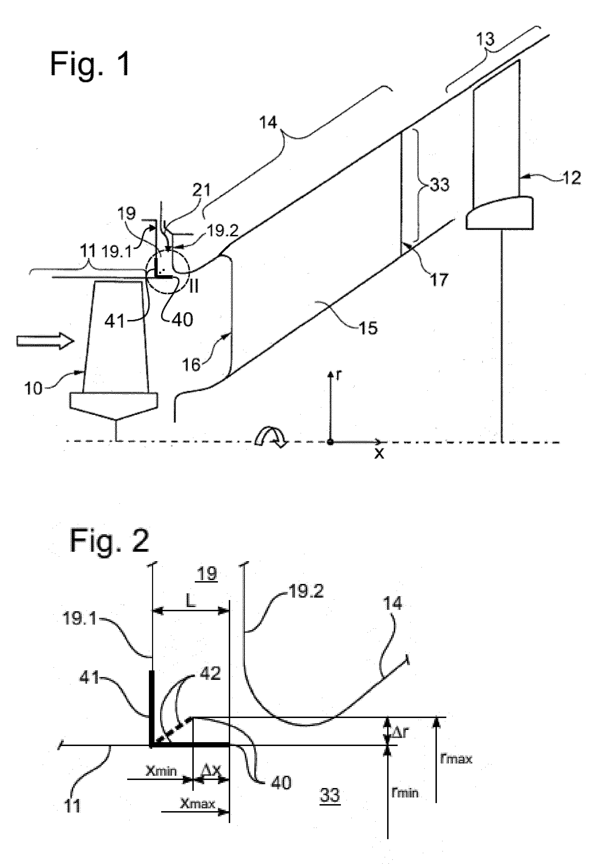

Fig. 1 zeigt in DE 10 2011 008 812 A1 entsprechender Weise zwei übereinandergelegte Meridianschnitt einer Baugruppe einer Gasturbine nach einer Ausführung der vorliegenden Erfindung mit einem Turbinengehäuse einer Hoch- oder Mitteldruckturbine, das eine radial äußere Begrenzungswand 11 und in einer Ausführung einen Rotor mit einer Mehrzahl von in Umtangsrichtung beabstandeten Laufschaufeln 10 aufweist, und einem dem Turbinengehäuse stromabwärts (rechts in Fig. 1) benachbarten Zwischengehäuse, das eine radial äußere Begrenzungswand 14 und Stützrippen 15 aufweist, die integral mit der radial äußeren Begrenzungswand 14 des Zwischengehäuses ausgebildet sind und jeweils eine stromaufwärtige Vorderkante 16 und eine stromabwärtige Hinterkante 17 aufweisen, sowie eines weitere Turbinengehäuses einer Mittel- oder Niederdruckturbine der Gasturbine, das dem Zwischengehäuse stromabwärts benachbart ist und eine radial äußere Begrenzungswand 13 und in einer Ausführung einen Rotor mit einer Mehrzahl von in Umfangsrichtung beabstandeten Laufschaufeln 12 aufweist.

Im Ausführungsbeispiel werden die Rotoren zur kompakteren Darstellung verallgemeinernd als Teil des Turbinengehäuses bezeichnet. Gleichermaßen kann ein Turbinengehäuse im Sinne der vorliegenden Erfindung auch nur das relativ zu der Gasturbine bzw. dem Zwischengehäuse feststehende bzw. stationäre Bauteil ohne den in ihm drehbar gelagerten Rotor sein, insbesondere die radial äußere Begrenzungswand 11 bzw. 13.

Die Turbinen- und Zwischengehäuse definieren einen Strömungskanal 33 für ein Arbeitsgas aus einer Brennkammer der Gasturbine, das in Fig. 1 links durch einen horizontalen Pfeil in Strömungs- bzw. Axialrichtung angedeutet ist. Dieser wird radial außen durch die radial äußeren Begrenzungswände 11, 13 und 14 bzw. die Turbinen-und das Zwischengehäuse radial begrenzt. bzw. gebildet.

Zwischen dem Turbinengehäuse mit der Begrenzungswand 11 und dem Zwischengehäuse mit der Begrenzungswand 14 ist eine radial außen von dem Strömungskanal 33 angeordnete Kavität 19 ausgebildet, die einen Kühlluftkanal bildet, der mit einer Kühlluftversorgung der Gasturbine kommuniziert und dazu vorgesehen bzw. eingerichtet ist, Kühlluft 21 in den Strömungskanal 33 einzuführen und Wärmeausdehnungen zuzulassen. Die Kavität 19 weist eine turbinengehäuseseitige Stirnseite 19.1, die durch eine axiale, dem Zwischengehäuse zugewandte Stirnseite des Turbinengehäuses gebildet ist, und eine zwischengehäuseseitige Stirnseite 19.2, die durch eine axiale, dem Turbinengehäuse zugewandte Stirnseite des Zwischengehäuses gebildet ist, auf, wobei die beiden Stirnseiten 19.1, 19.2 der Kavität 19 axial voneinander beabstandet sind, um den Kühlluftkanal zu bilden.

Fig. 2 zeigt ein in Fig. 1 mit "II" bezeichnetes Detail in vergrößerter Ansicht. Wie insbesondere hierin zu erkennen, weist die Kavität eine strömungskanalseitige Öffnung mit einer turbinengehäuseseitigen Randkontur 40 auf.

Diese ist an einem Flansch ausgebildet, der separat von dem Turbinengehäuse als Blechformteil hergestellt und mit dem Turbinengehäuse verbunden ist. Der Flansch weist einen ersten Schenkel 41, der sich im Wesentlichen in Radialrichtung r erstreckt und mit dem Turbinengehäuse verbunden ist, und einen zweiten bzw. Axial-schenkel 42 auf, der sich im Wesentlichen in Axialrichtung x erstreckt und gegen den ersten Schenkel um etwa 90° geneigt ist und an dessen dem Turbinengehäuse abgewandter axialer Stirnseite (rechts in Fig. 1) die turbinengehäuseseitige Randkontur 40 ausgebildet ist.

Eine abgerundete Eintrittskante (links in Fig. 1) der radial äußeren Begrenzungswand 14 des Zwischengehäuses sowie eine Austrittskante (rechts in Fig. 1) der radial äußere Begrenzungswand 11 des Turbinengehäuses sind radial und axial rotationssymmetrisch ausgebildet.

In Fig. 1, 2 sind zwei Meridianschnitte übereinandergelegt dargestellt. Dabei ist ein durch- bzw. ausgezogen dargestellter Schnitt ein Meridianschnitt in einer ersten Umfangsposition, die einer stromaufwärtigen Vorderkante 16 einer beliebigen Stützrippe 15 gegenüberliegt, wobei dieser Meridianschnitt für alle Stützrippen gleich ist.

Ein strichliert dargestellter Schnitt ist hingegen ein Meridianschnitt in einer zweiten Umfangsposition zwischen einem beliebigen Paar von zwei in Umfangsrichtung benachbarten Stützrippen, die von den Umfangspositionen der Vorderkanten der beiden Stützrippen um je 50% des Abstandes in Umfangsrichtung zwischen den Umfangspositionen dieser Vorderkanten beabstandet ist, wobei auch dieser Meridianschnitt für alle Mitten zwischen in Umfangsrichtung benachbarten Stützrippen gleich ist. Nachfolgende Ausführungen gelten daher für alle Umfangsbereiche zwischen je zwei in Umfangsrichtung benachbarten Stützrippen 15.

Die erste Umfangsposition bzw. der in Fig. 1, 2 ausgezogen dargestellte Meridianschnitt befindet sich entsprechend stromauf einer Stützrippe bzw. der Umfangsposition ihrer Vorderkante, die zweite Umfangsposition bzw. der in Fig. 1, 2 strichliert dargestellte Meridianschnitt entsprechend in der Mitte zwischen zwei benachbarten Stützrippen bzw. in Umfangsrichtung auf Höhe der halben Teilung zwischen zwei benachbarten Stützrippen.

Wie insbesondere in Fig. 2 angedeutet, weist die Randkontur 40 in der ersten Umfangsposition (ausgezogen in Fig. 2) eine maximale axiale Erstreckung stromabwärts xₘₐₓ und in der zweiten Umfangsposition (strichliert in Fig. 2) eine minimale axiale Erstreckung stromabwärts xₘᵢₙ auf, wobei eine Differenz Δx = |xₘₐₓ - xₘᵢₙ| zwischen der maximalen und minimalen axialen Erstreckung ebenfalls eingezeichnet ist.

Wie ebenfalls in Fig. 2 angedeutet, weist die radial äußere Randkontur 40 in der ersten Umfangsposition (ausgezogen in Fig. 2) eine minimale radiale Erstreckung vom Strömungskanal weg bzw. einen minimalen radialen Abstand zur Drehachse der Gasturbine rₘᵢₙ und in der zweiten Umfangsposition (strichliert in Fig. 2) eine maximale radiale Erstreckung vom Strömungskanal weg bzw. einen maximalen radialen Abstand zur Drehachse der Gasturbine rₘₐₓ auf, wobei eine Differenz Δr = |rₘₐₓ - rₘᵢₙ| zwischen der maximalen und minimalen radialen Erstreckung ebenfalls eingezeichnet ist.

Mit L ist die maximale axiale Länge des Axialschenkels 42 bezeichnet, die zugleich den maximalen axialen Abstand der Randkontur 40 zu der turbinengehäuseseitigen Stirnseite 19.1 der Kavität 19 darstellt.

In der Ausführung beträgt der Quotient Δx/L = 0,5 und der Quotient Δr/L = 0,2.

Zwischen den maximalen und minimalen axialen bzw. radialen Erstreckungen verändert sich die turbinengehäuseseitige Randkontur 40 entlang des Umfangs bzw. in Umfangsrichtung stetig bzw. knickfrei, vorzugsweise mäander-, insbesondere sinusförmig.

Wie oben angegeben, gelten die vorstehenden Ausführungen für alle Umfangsbereiche zwischen je zwei in Umfangsrichtung benachbarten Stützrippen 15. Die radial äußere turbinengehäuseseitige Randkontur 40 verändert sich somit entlang des Umfangs bzw. in Umfangsrichtung periodisch mit der Teilung der Stützrippen 15, wobei die Randkontur jeweils an einer ersten Umfangsposition stromauf einer Vorderkante einer Stützrippe eine maximale axiale Erstreckung bzw. Axialposition xₘₐₓ stromabwärts und eine minimale radiale Erstreckung vom Strömungskanal weg bzw. einen minimalen radialen Abstand zu einer Drehachse der Gasturbine rₘᵢₙ aufweist. Jeweils an einer zweiten Umfangsposition in der Mitte zwischen einem Paar benachbarter Stützrippen bzw. in Umfangsrichtung auf Höhe der halben Teilung weist die Randkontur 40 hingegen eine minimale axiale Erstreckung bzw. Axialposition xₘᵢₙ stromabwärts und eine maximale radiale Erstreckung vom Strömungskanal weg bzw. einen maximalen radialen Abstand zu einer Drehachse der Gasturbine rₘₐₓ auf. Das Verhältnis zwischen diesen Erstreckungen ist durch die oben angegebenen Quotienten Δx/L bzw. Δr/L bestimmt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Laufschaufel
- 11: radial äußere Begrenzungswand (Turbinengehäuse)
- 12: Laufschaufel
- 13: radial äußere Begrenzungswand (weiteres Turbinengehäuse)
- 14: radial äußere Begrenzungswand (Zwischengehäuse)
- 15: Stützrippe (Zwischengehäuse)
- 16: Vorderkante
- 17: Hinterkante
- 19: Kavität
- 19,1: turbinengehäuseseitige Stirnseite
- 19.2: zwischengehäuseseitige Stirnseite
- 21: Kühlluft
- 33: Strömungskanal
- 40: turbinengehäuseseitige Randkontur
- 41: erster Schenke
- 42: zweiter Schenkel (Axialschenkel)

- L: maximale axiale Länge des Axialschenkels
- r: radiale Richtung
- rₘₐₓ: maximale radiale Erstreckung (Radialposition) vom Strömungskanal weg
- rₘᵢₙ: minimale radiale Erstreckung (Radialposition) vom Strömungskanal weg
- Δr: Differenz |rₘₐₓ - rₘᵢₙ|
- x: axiale Richtung
- xₘₐₓ: maximale axiale Erstreckung (Axialposition) stromabwärts
- xₘᵢₙ: minimale axiale Erstreckung (Axialposition) stromabwärts
- Δx: Differenz |xₘₐₓ - xₘᵢₙ|

## Patentansprüche

1. Baugruppe für eine Gasturbine, insbesondere ein Gasturbinenflugtriebwerk, mit
einem Turbinengehäuse (11);
einem Zwischengehäuse (14), das dem Turbinengehäuse stromabwärts benachbart ist und eine Mehrzahl von in Umfangsrichtung beabstandeten Stützrippen (15) aufweist;
wobei das Turbinen- und Zwischengehäuse einen Strömungskanal (33) für ein Arbeitsgas aus einer Brennkammer der Gasturbine definieren und zwischen dem Turbinen- und dem Zwischengehäuse eine Kavität, insbesondere ein Kühlluftkanal (19), mit einer strömungskanalseitigen Öffnung ausgebildet ist;
**dadurch gekennzeichnet, dass**
eine turbinengehäuseseitige Randkontur (40) der Öffnung sich entlang des Umfangs radial und/oder axial verändert, und
dass die Randkontur (40) an einem separaten, mit dem Turbinengehäuse verbundenen, insbesondere zweischenkeligen, Flansch (41, 42) ausgebildet ist.

2. Baugruppe nach dem vorhergehenden Anspruch, **dadurch gekennzeichnet, dass** eine Begrenzungswand (11) des Turbinengehäuses, die den Strömungskanal (33) radial begrenzt, eine Austrittskante aufweist, die radial und/oder axial rotationssymmetrisch ist.

3. Baugruppe nach einem der vorhergehenden Ansprüche, **dadurch gekennzeichnet, dass** eine Begrenzungswand (14) des Zwischengehäuses, die den Strömungskanal (33) radial begrenzt, eine Eintrittskante aufweist, die radial und/oder axial rotationssymmetrisch ist.

4. Baugruppe nach einem der vorhergehenden Ansprüche, **dadurch gekennzeichnet, dass** in wenigstens einem Umfangsbereich zwischen einer Umfangsposition einer stromaufwärtigen Vorderkante einer Stützrippe (15) und einer Umfangsposition einer stromaufwärtigen Vorderkante einer in Umfangsrichtung benachbarten Stützrippe die Randkontur (40) an einer ersten Umfangsposition, die von der Umfangsposition der Vorderkante der einen Stützrippe (15) um höchstens 20% eines Abstandes zwischen den Umfangspositionen der Vorderkanten der beiden Stützrippen beabstandet ist, eine erste axiale Erstreckung stromabwärts (xₘₐₓ) und an einer zweiten Umfangsposition zwischen den beiden Stützrippen, die von den Umfangspositionen der Vorderkanten der beiden Stützrippen um je wenigstens 30% des Abstandes zwischen den Umfangspositionen der Vorderkanten der beiden Stützrippen beabstandet ist, eine zweite axiale Erstreckung stromabwärts (xₘᵢₙ) aufweist, wobei die erste axiale Erstreckung größer als die zweite axiale Erstreckung, insbesondere die erste axiale Erstreckung eine maximale axiale Erstreckung (xₘₐₓ) und/oder die zweite axiale Erstreckung eine minimale axiale Erstreckung (xₘᵢₙ) stromabwärts innerhalb des Umfangsbereichs ist.

5. Baugruppe nach einem der vorhergehenden Ansprüche, **dadurch gekennzeichnet, dass** in wenigstens einem Umfangsbereich zwischen einer Umfangsposition einer stromaufwärtigen Vorderkante einer Stützrippe (15) und einer Umfangsposition einer stromaufwärtigen Vorderkante einer in Umfangsrichtung benachbarten Stützrippe die Randkontur (40) an einer ersten Umfangsposition, die von der Umfangsposition der Vorderkante der einen Stützrippe (15) um höchstens 20% eines Abstandes zwischen den Umfangspositionen der Vorderkanten der beiden Stützrippen beabstandet ist, eine erste radiale Erstreckung vom Strömungskanal weg (rₘᵢₙ) und an einer zweiten Umfangsposition zwischen den beiden Stützrippen, die von den Umfangspositionen der Vorderkanten der beiden Stützrippen um je wenigstens 30% des Abstandes zwischen den Umfangspositionen der Vorderkanten der beiden Stützrippen beabstandet ist, eine zweite radiale Erstreckung vom Strömungskanal weg (rₘₐₓ) aufweist, wobei die erste radiale Erstreckung kleiner als die zweite radiale Erstreckung, insbesondere die erste radiale Erstreckung eine minimale radiale Erstreckung (rₘᵢₙ) und/oder die zweite radiale Erstreckung eine maximale radiale Erstreckung vom Strömungskanal weg (rₘₐₓ) innerhalb des Umfangsbereichs ist.

6. Baugruppe nach einem der vorhergehenden Ansprüche, **dadurch gekennzeichnet, dass** in wenigstens einem Umfangsbereich zwischen einer Umfangsposition einer stromaufwärtigen Vorderkante einer Stützrippe (15) und einer Umfangsposition einer stromaufwärtigen Vorderkante einer in Umfangsrichtung benachbarten Stützrippe ein Quotient (Δx/L) einer Differenz (Δx) zwischen einer maximalen und minimale axialen Erstreckung (xₘₐₓ, xₘᵢₙ) der Randkontur (40) stromabwärts dividiert durch einen maximalen axialen Abstand der Randkontur (40) zu einer turbinengehäuseseitigen Stirnseite (19.1) der Kavität (19), insbesondere durch eine maximale axiale Länge (L) eines Axialschenkels (42) eines separaten, mit dem Turbinengehäuse verbundenen Flansches, an dem die Randkontur (40) ausgebildet ist, wenigstens 0,02 und/oder höchstens 0,8 beträgt.

7. Baugruppe nach einem der vorhergehenden Ansprüche, **dadurch gekennzeichnet, dass** in wenigstens einem Umfangsbereich zwischen einer Umfangsposition einer stromaufwärtigen Vorderkante einer Stützrippe (15) und einer Umfangsposition einer stromaufwärtigen Vorderkante einer in Umfangsrichtung benachbarten Stützrippe ein Quotient (Δr/L) einer Differenz (Δr) zwischen einer maximalen und minimalen radialen Erstreckung (rₘₐₓ, rₘᵢₙ) der Randkontur (40) vom Strömungskanal (33) weg dividiert durch einen maximalen axialen Abstand der Randkontur (40) zu einer turbinengehäuseseitigen Stirnseite (19.1) der Kavität (19), insbesondere durch eine maximale axiale Länge eines Axialschenkels (42) eines separaten, mit dem Turbinengehäuse verbundenen Flansches, an dem die Randkontur (40) ausgebildet ist, wenigstens 0,02 und/oder höchstens 0,4 beträgt.

8. Gasturbine, insbesondere ein Gasturbinenflugtriebwerk, mit einer Baugruppe nach einem der vorhergehenden Ansprüche, **gekennzeichnet durch** ein weiteres Turbinengehäuse (13), das dem Zwischengehäuse (14) stromabwärts benachbart ist.

9. Gasturbine nach dem vorhergehenden Anspruch, **dadurch gekennzeichnet, dass** die Kavität mit einer Kühlluftversorgung kommuniziert.

10. Verfahren zum Herstellen einer Baugruppe nach einem der Ansprüche 1-6, **dadurch gekennzeichnet, dass** eine sich entlang des Umfangs radial und/oder axial verändernde Randkontur (40) der Öffnung an einem separaten, mit dem Turbinengehäuse verbundenen, insbesondere zweischenkeligen, Flansch (41, 42) ausgebildet wird.

## Claims

1. Assembly for a gas turbine, particularly a gas turbine aircraft engine, having a turbine housing (11);
an intermediate housing (14) which is downstream adjacent to the turbine housing, having a multiplicity of support ribs (15) which are spaced apart in circumferential direction,
wherein the turbine and intermediate housing define a flow channel (33) for a working gas from a combustion chamber of the gas turbine, and a cavity, particularly a cooling air channel (19), with an opening on the side of the flow channel, is formed between the turbine and intermediate housing,
**characterized in that**
an edge contour (40) of the opening on the side of the turbine housing changes radially and/or axially along the circumference, and that the edge contour (40) is formed on a separate, particularly double-limbed flange (41, 42) which is connected to the turbine housing.

2. Assembly according to the previous claim, **characterized in that** a boundary wall (11) of the turbine housing, which radially delimits the flow channel (33), has an exit edge which is radially and/or axially rotationally symmetrical.

3. Assembly according to one of the previous claim, **characterized in that** a boundary wall (14) of the intermediate housing, which radially delimits the flow channel (33), has an entrance edge which is radially and/or axially rotationally symmetrical.

4. Assembly according to one of the previous claims, **characterized in that** in at least one circumferential area between a circumferential position of an upstream front edge of a support rib (15), and a circumferential position of an upstream front edge of a support rib which is adjacent in circumferential direction, the edge contour (40) has a first axial extension downstream (xₘₐₓ) at a first circumferential position which is spaced apart from the circumferential position of the front edge of the one support rib (15) by no more than 20% of a distance between the circumferential positions of the front edges of the two support ribs, and a second axial extension downstream (xₘᵢₙ) at a second circumferential position between the two support ribs which are spaced apart from the circumferential positions of the two support ribs by at least 30% of the distance between the circumferential positions of the front edges of the two support ribs, wherein the first axial extension is greater than the second axial extension, particularly the first axial extension being a maximum axial extension (xₘₐₓ) and/or the second axial extension a minimum axial extension (xₘᵢₙ) downstream within the circumferential area.

5. Assembly according to one of the previous claims, **characterized in that** in at least one circumferential area between a circumferential position of an upstream front edge of a support rib (15), and a circumferential position of an upstream front edge of a support rib which is adjacent in circumferential direction, the edge contour (40) has a first radial extension away from the flow channel (rₘᵢₙ) at a first circumferential position which is spaced apart from the circumferential position of the front edge of the one support rib (15) by no more than 20% of a distance between the circumferential positions of the front edges of the two support ribs, and a second radial extension away from the flow channel (rₘₐₓ) at a second circumferential position between the two support ribs which are spaced apart from the circumferential positions of the two support ribs by at least 30% of the distance between the circumferential positions of the front edges of the two support ribs, wherein the first radial extension is smaller than the second radial extension, particularly the first radial extension being a minimum radial extension (rₘᵢₙ) and/or the second radial extension a maximum radial extension away from the flow channel (rₘₐₓ) within the circumferential area.

6. Assembly according to one of the previous claims, **characterized in that** in at least one circumferential area between a circumferential position of an upstream front edge of a support rib (15), and a circumferential position of an upstream front edge of a support rib which is adjacent in circumferential direction, a quotient (Δx/L) of a difference (Δx) between a maximum and minimum axial extension (xₘₐₓ, xₘᵢₙ) of the edge contour (40) downstream, divided by a maximum axial distance of the edge contour (40) to a front (19.1), on the side of the turbine housing, of the cavity (19), particularly by a maximum axial length (L) of an axial limb (42) of a separate flange, which is connected to the turbine housing, with the edge contour (40) being formed on said flange, is at least 0.02 and/or no more than 0.8.

7. Assembly according to one of the previous claims, **characterized in that** in at least one circumferential area between a circumferential position of an upstream front edge of a support rib (15), and a circumferential position of an upstream front edge of a support rib which is adjacent in circumferential direction, a quotient (Δr/L) of a difference (Δr) between a maximum and minimum axial extension (rₘₐₓ, rₘᵢₙ) of the edge contour (40) away from the flow stream (33), divided by a maximum axial distance of the edge contour (40) to a front (19.1), on the side of the turbine housing, of the cavity (19), particularly by a maximum axial length of an axial limb (42) of a separate flange, which is connected to the turbine housing, with the edge contour (40) being formed on said flange, is at least 0.02 and/or no more than 0.4.

8. Gas turbine, particularly a gas turbine aircraft engine, having an assembly according to one of the previous claims, **characterized by** a further turbine housing (13) which is downstream adjacent to the intermediate housing (14).

9. Gas turbine according to the previous claim, **characterized in that** the cavity communicates with a cooling air supply.

10. Method for producing an assembly according one of the claims 1-6, **characterized in that** an edge contour (40) of the opening, which radially and/or axially changes along the circumference, is formed on a separate, particularly double-limbed flange (41, 42) which is connected to the turbine housing.

## Revendications

1. Ensemble pour une turbine à gaz, en particulier pour un groupe motopropulseur à turbine à gaz, comprenant :
un boîtier de turbine (11) ;
un boîtier intermédiaire (14) qui est voisin en aval du boîtier de turbine et présente une pluralité de nervures d'appui (15) espacées dans la direction circonférentielle ;
dans lequel le boîtier de turbine et le boîtier intermédiaire définissent un canal d'écoulement (33) pour un gaz de travail venant d'une chambre de combustion de la turbine à gaz et une cavité, en particulier un canal d'air de refroidissement (19), avec une ouverture côté canal d'écoulement est formée entre le boîtier de turbine et le boîtier intermédiaire ;
**caractérisé en ce que**
un contour de bord côté boîtier de turbine (40) de l'ouverture varie radialement et/ou axialement le long de la circonférence et
le contour de bord (40) est formé sur une bride séparée (41, 42) reliée au boîtier de turbine, en particulier à deux branches.

2. Ensemble selon la revendication précédente, **caractérisé en ce qu'**une paroi de délimitation (11) du boîtier de turbine, qui délimite radialement le canal d'écoulement (33), présente une arête de sortie qui présente une symétrie de rotation radialement et/ou axialement.

3. Ensemble selon l'une quelconque des revendications précédentes, **caractérisé en ce qu'**une paroi de délimitation (14) du boîtier intermédiaire, qui délimite radialement le canal d'écoulement (33), présente une arête d'entrée qui présente une symétrie de rotation radialement et/ou axialement.

4. Ensemble selon l'une quelconque des revendications précédentes, **caractérisé en ce que**, dans au moins une zone circonférentielle entre une position circonférentielle d'une arête avant en amont d'une nervure d'appui (15) et une position circonférentielle d'une arête avant en amont d'une nervure d'appui voisine dans la direction circonférentielle, le contour de bord (40) présente, dans une première position circonférentielle, qui est espacée de la position circonférentielle de l'arête avant de la première nervure d'appui (15) au maximum de 20 % d'un intervalle entre les positions circonférentielles des arêtes avant des deux nervures d'appui, une première extension axiale en aval (xₘₐₓ), et, dans une deuxième position circonférentielle entre les deux nervures d'appui, qui est espacée des positions circonférentielles des arêtes avant des deux nervures d'appui respectivement d'au moins 30 % de l'intervalle entre les positions circonférentielles des arêtes avant des deux nervures d'appui, une seconde extension axiale en aval (xₘᵢₙ), dans lequel la première extension axiale est supérieure à la seconde extension axiale, en particulier la première extension axiale est une extension axiale maximale (xₘₐₓ) et/ou la seconde extension axiale est une extension axiale minimale (xₘᵢₙ) en aval à l'intérieur de la zone circonférentielle.

5. Ensemble selon l'une quelconque des revendications précédentes, **caractérisé en ce que**, dans au moins une zone circonférentielle entre une position circonférentielle d'une arête avant en amont d'une nervure d'appui (15) et une position circonférentielle d'une arête avant en amont d'une nervure d'appui voisine dans la direction circonférentielle, le contour de bord (40) présente, dans une première position circonférentielle, qui est espacée de la position circonférentielle de l'arête avant de la première nervure d'appui (15) au maximum de 20 % d'un intervalle entre les positions circonférentielles des arêtes avant des deux nervures d'appui, une première extension radiale s'écartant du canal d'écoulement (rₘᵢₙ) et, dans une seconde position circonférentielle entre les deux nervures d'appui, qui est espacée des positions circonférentielles des arêtes avant des deux nervures d'appui respectivement d'au moins 30 % de l'intervalle entre les positions circonférentielles des arêtes avant des deux nervures d'appui, une seconde extension radiale s'écartant du canal d'écoulement (rₘₐₓ), dans lequel la première extension radiale est inférieure à la seconde extension radiale, en particulier la première extension radiale est une extension radiale minimale (rₘᵢₙ) et/ou la seconde extension radiale est une extension radiale maximale s'écartant du canal d'écoulement (rₘₐₓ) à l'intérieur de la zone circonférentielle.

6. Ensemble selon l'une quelconque des revendications précédentes, **caractérisé en ce que**, dans au moins une zone circonférentielle entre une position circonférentielle d'une arête avant en amont d'une nervure d'appui (15) et une position circonférentielle d'une arête avant en amont d'une nervure d'appui voisine dans la direction circonférentielle, un quotient (Δx/I) d'une différence (Δx) entre une extension axiale maximale et une extension axiale minimale (xₘₐₓ, xₘᵢₙ) du contour de bord (40) en aval divisée par une distance axiale maximale du contour de bord (40) à une face avant côté boîtier de turbine (19.1) de la cavité (19), en particulier par une longueur axiale maximale (L) d'une branche axiale (42) d'une bride séparée reliée au boîtier de turbine, sur laquelle le contour de bord (40) est formé, atteint au moins 0,02 et/ou au maximum 0,8.

7. Ensemble selon l'une quelconque des revendications précédentes, **caractérisé en ce que**, dans au moins une zone circonférentielle entre une position circonférentielle d'une arête avant en amont d'une nervure d'appui (15) et une position circonférentielle d'une arête avant en amont d'une nervure d'appui voisine dans la direction circonférentielle, un quotient (Δr/I) d'une différence (Δr) entre une extension radiale maximale et une extension radiale minimale (rₘₐₓ, rₘᵢₙ) du contour de bord (40) s'écartant du canal d'écoulement (33) divisée par une distance axiale maximale du contour de bord (40) à une face avant côté boîtier de turbine (19.1) de la cavité (19), en particulier par une longueur axiale maximale d'une branche axiale (42) d'une bride séparée reliée au boîtier de turbine, sur laquelle le contour de bord (40) est formé, atteint au minimum 0,02 et/ou au maximum 0,4.

8. Turbine à gaz, en particulier groupe motopropulseur à turbine à gaz, comprenant un ensemble selon l'une quelconque des revendications précédentes, caractérisé(e) par un autre boîtier de turbine (13), qui est voisin en aval du boîtier intermédiaire (14).

9. Turbine à gaz selon la revendication précédente, **caractérisée en ce que** la cavité communique avec une alimentation en air de refroidissement.

10. Procédé de fabrication d'un ensemble selon l'une quelconque des revendications 1 à 6, **caractérisé en ce qu'**un contour de bord (40) de l'ouverture qui varie radialement et/ou axialement le long de la circonférence est formé sur une bride séparée (41, 42) reliée au boîtier de turbine, en particulier avec deux branches.
